# EUROPÄISCHE PATENTSCHRIFT

(11) **EP 1 585 643 B1**
(45) Veröffentlichungstag und Bekanntmachung des Hinweises auf die Patenterteilung: **07.06.2006**
(21) Anmeldenummer: 04703361.8
(22) Anmeldetag: 20.01.2004
(51) Int. Cl.: B60J 3/02

(54) **SONNENBLENDE**
SUN VISOR
PARE-SOLEIL

(30) Priorität: 24.01.2003 DE 10302675
(43) Veröffentlichungstag der Anmeldung: 19.10.2005
(73) Patentinhaber: DaimlerChrysler AG, 70567 Stuttgart (DE)
(72) Erfinder: PALLMER, Dominik, D-70569 Stuttgart (DE)
(74) Vertreter: Gmeiner, Christa Anna Maria
(86) Internationale Anmeldenummer: PCT/EP2004/000382
(87) Internationale Veröffentlichungsnummer: WO 2004/065152

(56) Entgegenhaltungen:
- PATENT ABSTRACTS OF JAPAN Bd. 2000, Nr. 19, 5. Juni 2001 (2001-06-05) -& JP 2001 055042 A (NEOEX LAB INC), 27. Februar 2001 (2001-02-27)
- PATENT ABSTRACTS OF JAPAN Bd. 1998, Nr. 09, 31. Juli 1998 (1998-07-31) -& JP 10 100671 A (DELTA KOGYO CO LTD), 21. April 1998 (1998-04-21)

## Beschreibung

Die Erfindung betrifft eine Sonnenblende für Kraftfahrzeuge nach dem Oberbegriff des Patentanspruchs 1.

In der US 2002/0190537 A1 ist eine gattungsbildende Sonnenblende offenbart, welche eine schlitzförmige Aufnahmeöffnung aufweist, durch welche ein flacher Gegenstand in einen Aufnahmebereich einschiebbar ist, der im von den Halbschalen der Sonnenblende gebildeten Hohlraum angeordnet ist. Diese Sonnenblende ist mit einem in deren Inneren parallel zu den Stirnflächen der Sonnenblende einschiebbaren Sonnenschild versehen, das parallel oder rechtwinklig zur Schwenkachse der Sonnenblende zwischen zwei Positionen bewegbar ist. Das Sonnenschild ist dabei durch die Halbschalen schiebegeführt und durch Anschlagmittel, welche am Schild selber und am Blendenkörper vorgesehen sind, gegen Verschieben aus dem Aufnahmebereich blockiert gehalten. Ein aufzunehmender zettel- oder kartenartiger Gegenstand ist dabei auf der Schmalseite des Sonnenschildes in dieses einschiebbar.

DE 196 35 684 A1 beschreibt eine Sonnenblende für Kraftfahrzeuge, die im Sonnenblendenkörper eine wannenförmige Vertiefung mit einem Anlageflansch ausbildet. In der Vertiefung sind verschiedene Einbaumodule der Sonnenblende montierbar, wie abdeckbare oder beleuchtbare Spiegel oder Spiegeleinheiten mit integrierten Taschen zur Aufnahme von Parktickets.

In DE 43 40 685 A1 ist eine Sonnenblende mit einer in dieser eingesetzten Spiegelbaueinheit beschrieben, wobei hier die Aufnahme für unterzubringende flache Gegenstände als Ticketklammer ausgebildet ist und den Gegenstand auf dem Spiegelgehäuse haltert.

Aufgabe der Erfindung ist es eine gattungsgemässe Sonnenblende bereitzustellen, deren Halterung für Gegenstände, wie Tankkarten oder Parktickets, einfach bedienbar ist, wobei der zu haltende Gegenstand insbesondere einfach einführbar sein und die Sonnenblende eine einfache Bauweise mit möglichst wenig Bauteilen aufweisen soll.

Die Aufgabe wird durch eine Sonnenblende mit den Merkmalen des Anspruchs 1 gelöst. Es handelt sich dabei um Sonnenblenden mit einem hohlen Kunststoff-Blendenkörper. Der Blendenkörper einer erfindungsgemäßen Sonnenblende weist einen Aufnahmebereich auf, der im Hohlraum des Blendenkörpers angeordnet ist. Weiterhin ist im Blendenkörper eine schlitzförmige Aufnahmeöffnung geschaffen, über die flache Gegenstände mindestens teilweise in den innenliegenden Aufnahmebereich einschiebbar sind.

Eine Sonnenblende für Fahrzeuge ist üblicherweise als flacher Körper ausgeführt, der zwei größere, annähernd parallele Stirnflächen aufweist und eine die beiden Stirnflächen verbindende, umlaufende, meist abgerundete Kante. Die Stirnflächen der Blendenkörper haben meist einen rechteckigen bis ovalen Umriß, wobei der Blendenkörper über die Erstreckung der Stirnflächen eine unterschiedliche Dicke - mit entsprechender Höhe und Gestalt der umlaufenden Kante - aufweisen kann. Es sind weiterhin gewölbte Blendenkörper denkbar.

Aufgebaut ist die Sonnenblende im Wesentlichen aus einem starren Grundelement, dem Blendenkörper. Der Blendenkörper kann hohl oder auch plattenförmig ausgebildet sein. An oder im Blendenkörper sind weiterhin Befestigungselemente zur Aufhängung der Sonnenblende im Fahrzeug ausgebildet oder appliziert. Der starre Blendenkörper kann mit einem Textil, einer Folie oder einer Schaumhaut kaschiert sein oder selber eine besondere Oberfläche ausbilden.

Eine schlitzförmige Gestalt der Aufnahmeöffnung ist gegeben, wenn die Öffnung senkrecht zur Richtung des Einschubweges des Gegenstandes einen Querschnitt mit einer länglichen Erstreckung aufweist, also in einer Richtung ein deutlich größeres und in einer anderen Richtung quer dazu ein deutlich kleineres Hauptabmaß besitzt.

Sonnenblenden für Kraftfahrzeuge sind üblicherweise um eine im Bereich des oberen Randes der Windschutzscheibe angeordnete und entlang dessen Erstreckung ausgerichtete Achse zwischen einer am Fahrzeugdachrahmen anliegenden Ruhestellung und einer an der Windschutzscheibe anliegenden Blendschutzstellung schwenkbar. Bei einer Ausführungsform einer erfindungsgemäßen Sonnenblende ist die schlitzförmige Aufnahme auf der in Blendschutzstellung an Windschutzscheibe anliegenden Seite angeordnet und somit in Ruhestellung dem Insassen zugewandt und damit diesem bequem zugänglich. Dadurch kann insbesondere zur Nutzung als Parktickthalter der Parkschein bei Sonnenblende in Ruhestellung in den Aufnahmeschlitz eingeschoben werden, und ist mit Umlegen der Sonnenblende in Blendschutzstellung an der Windschutzscheibe anliegend und damit behördlichen Kontrolldiensten einsehbar.

Die Sonnenblende weist einen Blendenkörper auf, der aus zwei zusammengesetzten Halbschalen gefertigt wird. Dadurch ist einerseits die nach innen gewandte Seite des Blendenkörpers und damit der innere Aufnahmebereich gestaltbar. Weiterhin ist eine in der durchgängigen Stirnfläche der Sonnenblende angeordnete Aufnahmeöffnung einfach zu fertigen.

Die Aufnahmeöffnung kann durch Bearbeitung bzw. Beschnitt hergestellt werden, wird jedoch idealerweise im urformenden Fertigungsschritt des Blendenkörpers erzeugt.

Für die Herstellung der Halbschalen bietet sich der Kunststoffspritzguß an, der eine besonders einfache Fertigung und Gestaltungsmöglichkeiten für den inneren Aufnahmebereich und die Aufnahmeöffnung bietet. Weitere mögliche Herstellverfahren sind ebenso Tiefzieh- oder Druckumformverfahren, die den Einsatz plastisch verformbarer Werkstoffe, wie beispielsweise hochwertig anmutender metallischer Werkstoffe für den Blendenkörper erlauben.

Neben einem einfachen Aufbau aus zwei annähernd großen Halbschalen sind auch konstruktive Abwandlungen, wie beispielsweise eine Halbschale mit Deckel oder mit deckendem Bezug denkbar.

Bei der Sonnenblende wird der Gegenstand beim Einschieben beispielsweise zwischen drei Anlagestellen geklemmt. Dabei wird dieser mit einer stetigen Wölbung durchgebogen. Bei mehrmaligem Umlenken bzw. Durchbiegen des Gegenstandes, beispielsweise in einer wellenförmigen Aufnahmekontur ergeben sich mehr als drei Anlagestellen.

Bei einer Sonnenblende wird der Gegenstand durch die Aufnahmeöffnung unter einem spitzen Winkel zur Sonnenblendenstirnfläche in den Hohlraum des Blendenkörpers geschoben. Dabei legt sich der Gegenstand im Hohlraum der Sonnenblende an einer ersten, gegenüber der Aufnahmeöffnung angeordneten Halbschale und an zwei Anlagestellen bzw. -kanten in der Aufnahmeöffnung an. Bei weiterem Einschieben verlagert sich die Anlagestelle an der ersten Halbschale und der Gegenstand wird zwischen den drei Anlagestellen verspannt und verklemmt. Dadurch kann auf separate Halte- oder Klemmbauteile innerhalb oder an der Sonnenblende verzichtet werden.

Der beschriebene Klemmvorgang kann auch durch Funktionselemente an der Innenseite der Halbschale verbessert werden, die idealerweise beim Spritzgießen oder Umformen erzeugt werden.

Eine Ausführungsform nach Anspruch 2 weist beispielsweise im Spritzguß auf einfache Weise herstellbare Rippen an der Innenseite der Halbschalen auf, deren zum Aufnahmebereich hin angeordnete freie Kante entlang der Einschubbewegung des Gegenstandes ausgerichtet ist. Auf diese Art bilden die Rippen im Hohlraum der Sonnenblende eine Einschub- und Anlage- bzw. Klemmkontur für den einzuführenden Gegenstand.

Eine Ausführungsform nach Anspruch 3 weist im Aufnahmebereich eine Anlagestelle bzw. einen Anlagebereich auf, der durch eigene elastische Nachgiebigkeit auch das Klemmen starrer Gegenstände oder unterschiedlich dicker Gegenstände verbessert.

Die Funktion kann beispielsweise durch eine Federklammer oder auch durch einen in diesem Bereich der Aufnahme angeordneten Schaum- oder Elastomerkörper erreicht werden. Das elastische Element kann dabei weitere Funktionen darstellen, wie beispielsweise die Ausbildung von Einschiebekonturen.

Bei einer Sonnenblende mit elastischen Anlagestellen ist eine Klemmung mit zwei Anlagestellen denkbar. Diese kann durch zwei, sich auf Vorder- und Rückseite des Gegenstandes gegenüberliegenden Anlagestellen entsprechend einer Klammer erreicht werden, wobei dann mindestens eine Seite elastisch nachgiebig ausgeführt ist.

Eine weitere Ausführung nach Anspruch 4 der Sonnenblende klemmt den Gegenstand durch Verbiegen quer zur Einschubrichtung. Die Aufnahmeöffnung weist durch ihre schlitzförmige Gestalt zwei lange und zwei kurze Umfangsabschnitte an ihrem Querschnitt auf. Den beiden langen Umfangsabschnitten sind im Inneren des Blendenkörpers zwei einander gegenüberliegende Wandbereiche zugeordnet. Die Wandbereiche sind annähernd parallel und begrenzen den im Blendenkörper angeordneten Aufnahmebereich.

Von beiden Wandbereichen ragen Rippen in den Aufnahmequerschnitt, die in Einschubrichtung ausgerichtet sind. Um ein Aufschieben des Gegenstandes auf die Rippen zu ermöglichen sind diese zur Aufnahmeöffnung hin abfallend gestaltet.

Die Rippen der gegenüberliegenden Wandbereiche sind im wesentlichen parallel nebeneinander und gegeneinander versetzt angeordnet und weisen mindestens im in Einschubrichtung hinteren Aufnahmebereich eine solche Höhe auf, daß sie jeweils in den Bereich zwischen den Rippen des gegenüberliegenden Wandbereichs einragen.

Wird der Gegenstand durch die Aufnahmeöffnung in den Aufnahmebereich eingeführt, legt er sich im zur Aufnahmeöffnung hin abfallenden Bereich der Rippen an diese an. Bei weiterem Einschieben wird der Gegenstand durch die von den gegenüberliegenden Wandbereichen ineinander einragenden Rippen entlang seiner in Einschubrichtung vorderen Kante durchgebogen und verklemmt.

Die Funktion der gegenseitig ineinander einragenden Rippen kann beispielsweise auch durch entsprechende Flächen, wie wellenförmige Profile, durch Flächenkanten oder auch durch elastische Elemente mit entsprechenden Konturen gebildet sein. Die beschriebenen Funktionselemente können durch ein seperates Bauteil, durch eine oder durch beide Halbschalen der Sonnenblende gebildet sein.

Eine Ausführungsform der Sonnenblende zeigt an den inneren Oberflächen der Halbschalen mit denen der eingeschobene Gegenstand in Berührung tritt, eine besondere Beschichtung auf. Diese kann beispielsweise ein aufgetragener Lack, eine aufgeklebte Folie oder auch eine dünnes Blech sein. Eine Ausführungsform des oben beschriebenen Schaumkörpers zum elastischen Verklemmen des Gegenstandes kann beispielsweise mit einer Folienoberfläche ausgeführt sein. Durch die besondere Ausführung der Anlagebereiche mit Materialien, die den Gleitvorgang durch besondere Glattheit, Härte oder besonders wenig Adhäsion unterstützen, kann das Einführen der Gegenstände, besonders bei niedriger Knicksteifigkeit, wie bei Papierzetteln, erleichtert werden.

Bei einer besonderen Ausführung der Sonnenblende ist auf einer der Stirnseiten der Sonnenblende die schlitzförmige Aufnahmeöffnung angeordnet und in der gegenüberliegenden Seite ein eingebauter Spiegel vorgesehen. Bei dieser Sonnenblende kann die Rückseite des Spiegels als Gleitfläche genutzt werden. Kanten, Rippen und Wände des Spiegelgehäuses können weiterhin als Anlagekontur oder als Einführbegrenzung dienen.

Vorgeschlagene Ausführgungsformen sind in den Figuren dargestellt. Dabei zeigt:
- Fig. 1: eine Ansicht auf eine erfindungsgemäße Sonnenblende,
- Fig. 2: eine Schnittdarstellung von Figur 1 durch die Sonnenblende entlang der Ebene A-A,
- Fig. 3: eine Schnittdarstellung einer Sonnenblende mit Darstellung einer im Aufnahmebereich angeordneten Federklammer,
- Fig. 4: eine Schnittdarstellung einer Sonnenblende mit Darstellung innenliegender Rippen,
- Fig. 5: eine Ansicht einer schlitzförmigen Aufnahmeöffnung mit Blickrichtung in Richtung der Einschubbewegung mit verschränkten Rippen im Querschnitt und
- Fig. 6: ein Schnitt entlang der in Figur 5 gezeigten Ebene B-B.

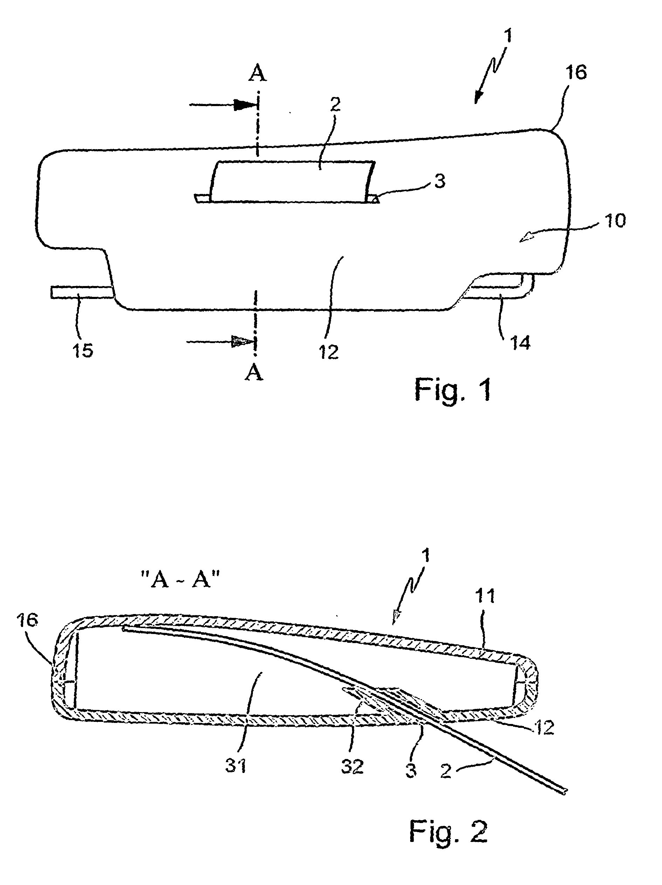

Figur 1 zeigt eine erfindungsgemäße Sonnenblende 1 in einer Sicht auf die in Ruhestellung dem Insassen zugewandte Stirnseite der Sonnenblende. Die Sonnenblende weist einen Blendenkörper 10 auf, der durch zwei gefügte Halbschalen gebildet ist, von denen in dieser Ansicht nur die Halbschale 12 zu sehen ist. Eine Trennfuge 16 zwischen den beiden Halbschalen 11 und 12 verläuft entlang der umlaufenden gerundeten Kante des Blendenkörpers 10. Die Sonnenblende 1 weist noch weitere Bauteile, wie beispielsweise Befestigungseinrichtungen 14 und 15 zur Anbringung am Fahrzeug auf. In einer Stirnfläche des Blendenkörpers 10 ist eine schlitzförmige Aufnahmeöffnung 3 ausgebildet, in der ein flacher Gegenstand 2, in diesem Fall ein Parkschein, eingeführt und gehaltert ist. Die Aufnahmeöffnung 3 ist bei der gezeigten Sonnenblende ohne weitere Bauteile durch den Blendenkörper 10 bzw. durch eine Halbschale 12 ausgebildet.

Figur 2 zeigt einen Schnitt entlang Ebene A-A in Figur 1. Dargestellt ist die Sonnenblende 1, mit ihrem hohlen Blendenkörper 10, zusammengesetzt der Halbschale 11 und einer Halbschale 12. Die Halbschalen 11 und 12 bilden entlang der abgerundeten umlaufenden Kante des Blendenkörpers 10 die Trennfuge 16. Durch die Aufnahmeöffnung 3 ist ein länglicher elastischer Gegenstand 2, beispielsweise ein Parkschein, in den im Hohlraum der Sonnenblende 1 angeordneten Aufnahmebereich 31 eingeschoben. Die Aufnahmeöffnung wird durch die Halbschale 12 gebildet und ist mit einem inneren Kragen 32 versehen, der die Aufnahmeöffnung 3 umrandet. Der Gegenstand 2 bewegt sich beim Einschieben zunächst im spitzen Winkel auf die im Hohlraum des Blendenkörpers gegenüber liegende Halbschale 11 zu und kommt dort zum Anliegen. Bei weiterem Einschieben stützt sich der Gegenstand 2 an der Halbschale 11 einerseits und in der Aufnahmeöffnung 3 bzw. deren Kragen 32 andererseits ab. Dabei wird bei entsprechender eigener Elastizität der Gegenstand 2 durchgebogen und verklemmt sich zwischen den Anlagestellen.

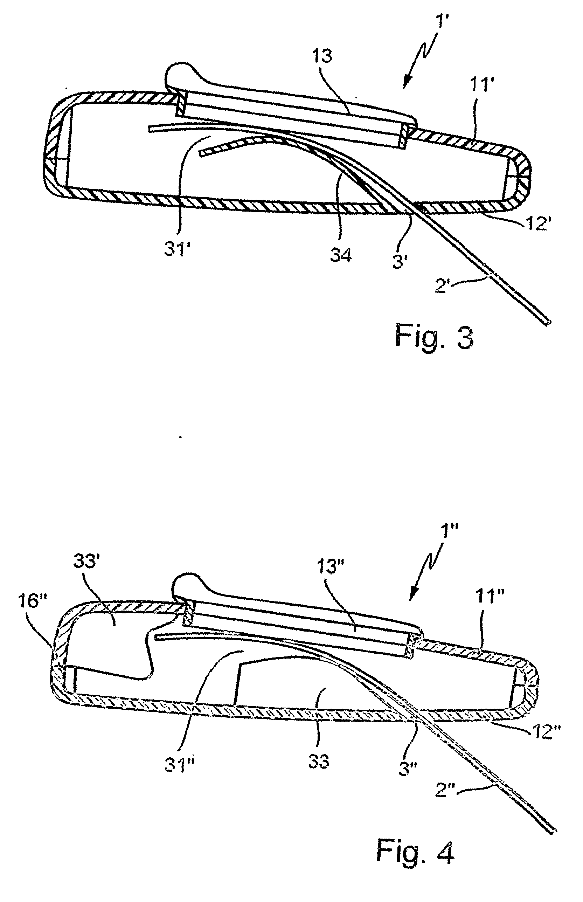

Figur 3 zeigt einen Schnitt durch eine Sonnenblende 1' in deren inneren Aufnahmebereich 31' eine Federklammer 34 angeordnet ist. Diese Federklammer 34 bildet eine elastische Anlagestelle, die eine klemmende Halterung relativ steifer Gegenstände ermöglicht. Ebenso ist durch das elastische Nachgeben - eine entsprechend große Ausgestaltung der Aufnahmeöffnung 3' vorausgesetzt - auch die Halterung etwas dickerer Gegenstände verbessert gegeben. Durch eine Aufnahmeöffnung 3' ist ein Gegenstand 2' in den Aufnahmebereich 31' eingebracht. In der Halbschale 11' der Sonnenblende 1' ist ein Spiegel 13 mit Deckel eingelassen. Die Anlage- und Klemmstelle der Federklammer 34 ist in ungefährer Mitte zwischen den starren Anlagestellen an der Aufnahmeöffnung 3' und am Spiegel 13 angeordnet. Die Rückseite des Spiegels 13 weist eine besonders glatte und harte Oberfläche auf, so daß der anliegende Gegenstand 2' bei weiterem Einschieben gut gleitet und verbessert verklemmt wird.

Figur 4 zeigt eine Sonnenblende 1", die eine bzw. mehrere in Blickrichtung hintereinander liegende Rippen 33 aufweist, die mit ihrer in den Hohlraum ragenden Kante eine Führungskontur für die Einschubbewegung und eine Anlagestelle für den geklemmten und gehalterten Gegenstand 2" bildet. Die Rippe begrenzt mit dieser Kante somit einen Aufnahmebereich 31" im Hohlraum der Sonnenblende 1". Im Hohlraum sind weitere Rippen 33' vorgesehen, an denen sich der Gegenstand 2" mit seiner in Einschubrichtung vorderen Kante beim Einschieben anlegt und abstützt. Diese Rippen begrenzen auf diese Weise den Einschubweg und somit ebenfalls den inneren Aufnahmebereich 31''.

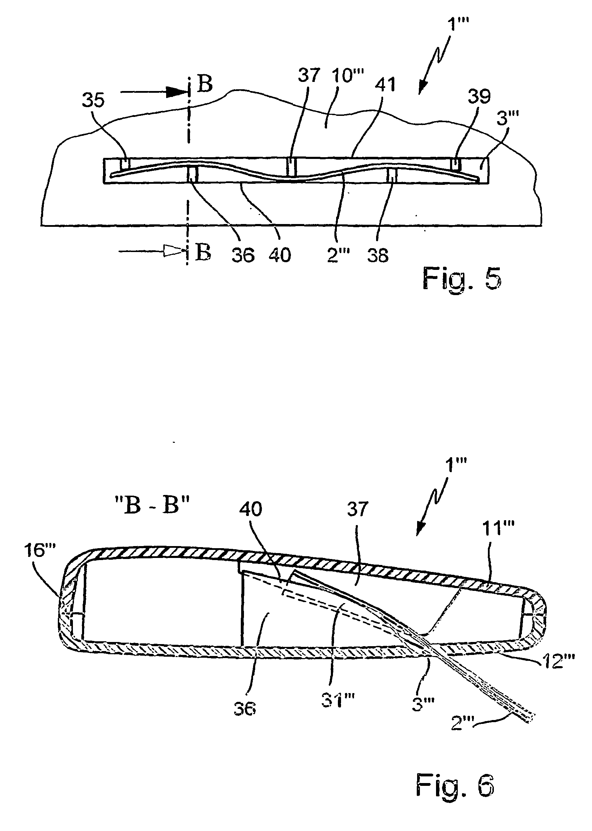

Figur 5 zeigt in einer Sicht in Einschieberichtung einen Bereich eines Blendenkörpers 10''' mit darin angeordneter Aufnahmeöffnung 3"'. Von den Wandbereichen des Blendenhohlraumes, die den länglichen Umfangsabschnitten 40 und 41 der Aufnahmeöffnung zugeordnet sind, ragen Rippen 35 - 39 in den Querschnitt der Aufnahmeöffnung 3"'. Die Rippen 35 - 39 weisen mindestens in einem Teil ihrer Erstreckung entlang der Einschieberichtung eine solche Höhe auf, dass jede Rippe in den Bereich zwischen den beiden seitlich benachbarten Rippen des gegenüberliegenden Wandbereichs einragen. Der zwischen diesen Rippen 35 - 39 eingeschobenen Gegenstand 2''' wird entlang seiner in Einschieberichtung vorderen Kante gebogen und auf diese Weise geklemmt. Dabei nimmt der Gegenstand 2''' im gebogenen Bereich eine wellenförmige Gestalt an.

Figur 6 zeigt entlang der Ebene B-B in Figur 5 die Sonnenblende mit ineinander ragenden Rippen 35 - 39 in einem Aufnahmebereich 31'''. In diesem Schnitt ist die Rippe 36 die den Gegenstand 2''' in Richtung der gegenüberliegenden Halbschale 11''' biegt und dahinterliegend die Rippe 37, die den Gegenstand wiederum in Richtung der gegenüberliegenden Halbschale 12''' biegt zu sehen. Die Rippe 36 ist dabei einteilig mit der Halbschale 12''', die Rippe 37 einteilig mit der Halbschale 11 ausgeführt. Die Rippen 36 und 37 weisen zur Aufnahmeöffnung 3''' eine abfallende Kontur auf, so dass der Gegenstand 2''' durch die Aufnahmeöffnung 3'" auf die Rippen geschoben werden kann. Im weiteren Verlauf in Einschieberichtung ragt die Rippe 36 über die Kante der Rippe 37 hinweg in den Bereich zwischen Rippe 37 und der nächsten benachbarten Rippe der Halbschale 11'''.

## Patentansprüche

1. Sonnenblende (1) für Kraftfahrzeuge, die einen hohlen, aus zwei Halbschalen (11, 12) gefertigten Blendenkörper (10) und eine Aufnahme zur Halterung eines flachen Gegenstandes (2), insbesondere wie Tankkarte oder Parkticket, aufweist, wobei im Blendenkörper (10) eine schlitzförmige Aufnahmeöffnung (3) ausgebildet ist, durch die der Gegenstand (2) in einen Aufnahmebereich (31) einschiebbar ist, der im Hohlraum des Blendenkörpers (10) angeordnet ist,
**dadurch gekennzeichnet,**
**dass** die Aufnahmeöffnung (3) in der Stirnfläche der Sonnenblende (1) angeordnet ist, wobei der zu halternde Gegenstand (2) unter einem spitzen Winkel zur Stirnfläche in die Aufnahmeöffnung (3) einführbar ist, beim Einschieben an der gegenüberliegenden Halbschale (11) zum Anliegen kommt und bei weiterem Einschieben zwischen den Halbschalen (11, 12) klemmend gehalten ist.

2. Sonnenblende nach Anspruch 1,
**dadurch gekennzeichnet,**
**dass** mindestens eine der Halbschalen (11,12) auf ihrer Innenseite Rippen (33, 33') aufweist, mittels derer der aufgenommene Gegenstand (2) geführt ist.

3. Sonnenblende nach Anspruch 1 oder 2,
**dadurch gekennzeichnet,**
**dass** im Aufnahmebereich (31) ein elastisch nachgiebiger Anlagebereich (34) ausgebildet ist.

4. Sonnenblende nach Anspruch 2,
**dadurch gekennzeichnet,**
**dass** der Gegenstand (2) entlang seiner in Einschubrichtung vorderen Kante gebogen und auf diese Weise geklemmt ist und hierzu von zwei gegenüberliegenden Wandungen des Aufnahmebereiches (31) entlang der Einschubrichtung ausgerichtete Rippen (35-39) wechselseitig eine Überdeckung (42) bildend abragen.

5. Sonnenblende nach einem der Ansprüche 1 - 4,
**dadurch gekennzeichnet,**
**dass** eine der Halbschalen (11,12) an der Innenseite bereichsweise, im besonderen in Anlagebereichen des Gegenstandes (2), Beschichtungen oder Einlagen aufweist.

## Claims

1. Sun visor (1) for motor vehicles, comprising a hollow visor body (10) produced from two half-shells (11, 12) and a receiving element for holding a flat object (2), such as, in particular, a fuel card or a parking ticket, a slotlike receiving opening (3) being formed in the visor body (10), through which receiving opening (3) the object (2) can be inserted into a receiving area (31) which is arranged in the cavity of the visor body (10), **characterized in that** the receiving opening (3) is arranged in the face of the sun visor (1), the object (2) which is to be held being able to be introduced into the receiving opening (3) at an acute angle with respect to the face, coming to bear on the opposite half-shell (11) during insertion, and being held clamped between the half-shells (11, 12) during further insertion.

2. Sun visor according to Claim 1, **characterized in that** at least one of the half-shells (11, 12) has ribs (33, 33') on its inner side which are used to guide the object (2) received.

3. Sun visor according to Claim 1, **characterized in that** an elastically flexible bearing region (34) is formed in the receiving area (31).

4. Sun visor according to Claim 1, **characterized in that** the object (2) is bent along its edge which is at the front in the direction of insertion and is clamped in this way, and, for this purpose, ribs (35-39) which are oriented along the direction of insertion protrude from two opposite walls of the receiving area (31), mutually forming a covering (42).

5. Sun visor according to one of claims 1-4, **characterized in that**, on its inner side, one of the half-shells (11, 12) has coatings or inlays over certain regions, in particular in the bearing regions of the object (2).

## Revendications

1. Pare-soleil (1) pour véhicules présentant un corps de pare-soleil (10) creux, constitué de deux demi-coques (11, 12) et un logement pour retenir un objet plat (2) tel qu'une carte à essence ou un ticket de stationnement, une ouverture de réception (3) en forme de fente étant réalisée dans le corps de pare-soleil (10), à travers laquelle l'objet (2) peut être enfoncé dans une région de réception (31) qui est disposée dans l'espace creux du corps de pare-soleil (10),
**caractérisé en ce que**
l'ouverture de réception (3) est disposée dans la face frontale du pare-soleil (1), l'objet (2) à retenir pouvant être introduit suivant un angle aigu par rapport à la surface frontale dans l'ouverture de réception (3), venant en appui contre la demi-coque opposée (11) lors de son insertion et étant maintenu serré entre les demi-coques (11, 12) s'il est inséré davantage.

2. Pare-soleil selon la revendication 1,
**caractérisé en ce que**
au moins l'une des demi-coques (11, 12) présente sur son côté intérieur des nervures (33, 33') au moyen desquelles l'objet reçu (2) est guidé.

3. Pare-soleil selon la revendication 1 ou 2,
**caractérisé en ce qu'**une
région d'appui flexible élastiquement (34) est réalisée dans la région de réception (31).

4. Pare-soleil selon la revendication 2,
**caractérisé en ce que**
l'objet (2) est courbé le long de son bord avant dans la direction d'insertion et est serré de cette manière, et à cet effet des nervures (35-39) orientées depuis deux parois opposées de la région de réception (31) le long de la direction d'insertion dépassent réciproquement en formant un recouvrement (42).

5. Pare-soleil selon l'une quelconque des revendications 1 à 4,
**caractérisé en ce que**
l'une des demi-coques (11, 12) présente, du côté intérieur, par portion, en particulier dans les régions d'appui de l'objet (2), des revêtements ou des doublures.
